# EUROPEAN PATENT SPECIFICATION

(11) **EP 3 661 773 B1**
(45) Date of publication and mention of the grant of the patent: **25.08.2021**
(21) Application number: 18762138.8
(22) Date of filing: 30.07.2018
(51) Int. Cl.: B60G 21/05, B29C 70/86, B29C 37/00, B29C 70/76, B29K 705/00, B29L 31/06

(54) **METHOD FOR MANUFACTURING A COMPOSITE TWIST-BEAM AXLE FOR A REAR SUSPENSION OF A VEHICLE**
VERFAHREN ZUR HERSTELLUNG EINER VERBUNDLENKERACHSE FÜR EINE HINTERRADAUFHÄNGUNG EINES FAHRZEUGS
PROCÉDÉ POUR FABRIQUER UN ESSIEU À POUTRE DE TORSION COMPOSITE POUR UNE SUSPENSION ARRIÈRE D'UN VÉHICULE

(30) Priority: 31.07.2017 IT 201700087619
(43) Date of publication of application: 10.06.2020
(73) Proprietor: Marelli Suspension Systems Italy S.p.A., 20011 Corbetta (MI) (IT)
(72) Inventor: SANTINI, Andrea, I-10093 Collegno (Torino) (IT); GOIA, Marco, I-10137 Torino (IT); PULINA, Fabio, I-10123 Torino (IT)
(74) Representative: Savoca, Agatino
(86) International application number: PCT/IB2018/055663
(87) International publication number: WO 2019/025930

(56) References cited:
- EP-A2- 2 075 146
- DE-A1-102005 013 154
- DE-A1-102009 047 671
- DE-A1-102011 079 979
- US-A- 4 883 289
- US-A1- 2016 046 169

## Description

The present invention generally relates to a method for manufacturing a twist-beam axle for a rear suspension of a vehicle, and more in particular to a method for manufacturing a composite twist-beam axle.

A typical twist-beam axle for a rear suspension of a vehicle basically comprises a central cross-member and a pair of trailing arms that are firmly connected to the opposite transverse ends of the cross-member and carry support elements for supporting the spindles of the wheels and mounting elements for mounting the axle to the body of the vehicle. While the trailing arms act as rigid components, in that they withstand negligible deformations under normal load conditions, the cross-member acts as a deformable component, in particular under torsion, to allow the trailing arms to rotate elastically one with respect to the other about the axis of the cross-member, i.e. about an axis perpendicular to the longitudinal direction (driving direction) of the vehicle. The torsional stiffness of the cross-member may be modified to reach a given value by suitably designing the shape of its cross-section, which may be an open section with a profile of different shapes, for example C-shape, U-shape, V-shape or Ω-shape, or a closed section. Typically, both the cross-member and the trailing arms are made of metal, in particular steel, and the trailing arms are connected to the cross-member by welding.

A method for manufacturing a composite twist-beam axle for a rear suspension of a vehicle is known from US 2016/046169 A1 according to the preamble of claim 1, wherein a cross-member made of a fibre-based composite material is connected at each of its opposite ends to a connection element of a respective trailing arm made of metal. The connection element may be made as a single piece with the respective trailing arm or be made as a separate piece from the trailing arm and be connected to the latter by threaded connection, bonding, welding or other kind of connection. The connection between the cross-member and each of the connection elements is obtained by force-fitting or by thermal joining process.

It is an object of the present invention to provide a method for manufacturing a composite twist-beam axle for a rear suspension of a vehicle that is improved with respect to the prior art and that, in particular, ensures a more reliable and resistant connection between the composite part and the metal part of the cross-member.

This and other objects are fully achieved according to the present invention by virtue of a method for manufacturing a composite twist-beam axle for a rear suspension of a vehicle comprising the steps defined in the attached independent claim 1.

In short, the invention is based on the idea of making a twist-beam axle wherein the trailing arms are made of metal, while the cross-member has a hybrid structure including a central element of composite material (matrix of thermosetting resin reinforced with fibres, for example carbon fibres and/or glass fibres and/or aramid fibres) and a pair of lateral elements of metal, wherein first the cross-member is made, by connecting said central element of composite material with said lateral elements of metal, and then each of the trailing arms is firmly connected to the cross-member by welding with a respective lateral element of the cross-member.

The central element of the cross-member may have an open or closed cross-section of any shape.

In the invention, each of the two lateral elements of the cross-member has a plurality of protrusions, in particular pin-like protrusions, on the external surface of a transversely inner portion thereof (that is, a portion facing the central element of the cross-member) and the central element of the cross-member is obtained from a suitably shaped mat of woven fibres, which is wound at its ends about the transversely inner portions of the two lateral elements, so that the protrusions penetrate the woven fibres of said mat, and which is preferably then impregnated with a polymeric matrix, in particular with a thermosetting resin, and finally cured (for example by autoclave curing process or any other known curing process).

The lateral elements of the cross-member, as well as the trailing arms, may be made of steel or other metal, such as for example aluminium.

Further features and advantages of the present invention will become apparent from the following detailed description, given purely by way of non-limiting example, with reference to the appended drawings, where:
Figure 1 is a perspective view of a twist-beam axle for a rear suspension of a vehicle obtained with the manufacturing method of the present invention;
Figure 2 is a perspective view of the cross-member of the twist-beam axle of Figure 1;
Figure 3 shows, on an enlarged scale, the detail A of Figure 1;
Figure 4 shows the mat of woven fibres from which the central element of composite material of the cross-member of Figure 2 is obtained; and
Figure 5 shows the mat of Figure 4 while it is being wound, at its opposite ends, about the transversely inner portions of the two lateral elements of the cross-member of Figure 2.

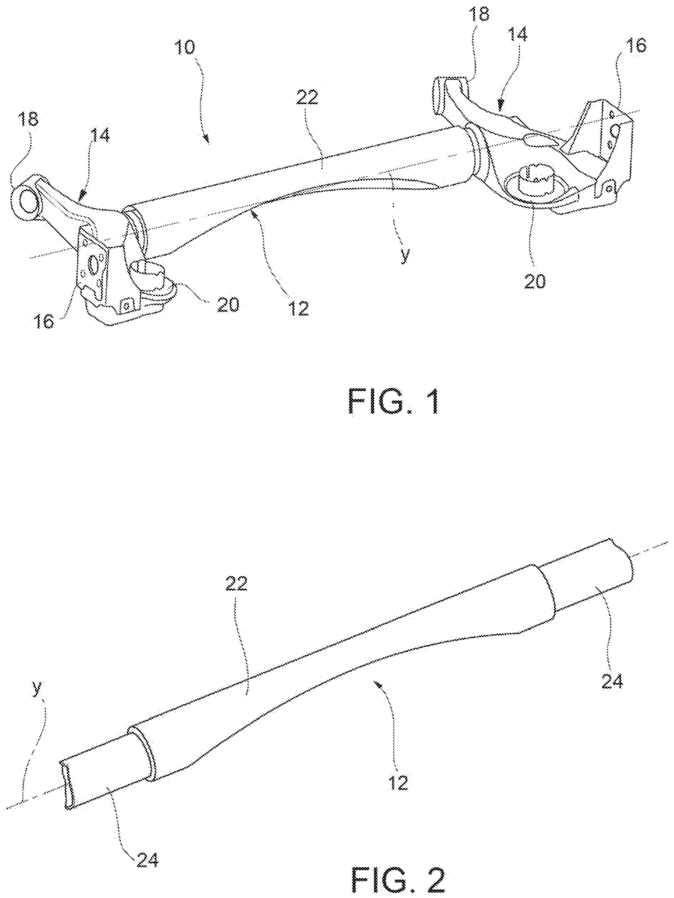

With reference first to Figure 1, a twist-beam axle for a rear suspension of a vehicle is generally indicated at 10 and basically comprises a cross-member 12 and a pair of trailing arms 14, each of which is firmly connected to a respective lateral end of the cross-member 12.

In the embodiment shown, the cross-member 12 is a rectilinear-axis cross-member extending along a transverse horizontal axis y, i.e. a horizontal axis perpendicular to the longitudinal direction, or fore-and-aft direction, of the vehicle. Alternatively, the cross-member 12 may also extend along a transverse axis having a curvilinear profile, for example an axis having an arcuate central portion with a concavity facing downwards and a pair of rectilinear lateral end portions.

In the embodiment shown, the cross-member 12 has a central cross-section with an open shape. More in particular, in the embodiment shown the central cross-section of the cross-member 12 has a C-shape, but might have any other open shape, for example an omega-shape. Alternatively, the cross-member 12 may have a central cross-section with a closed shape. Generally speaking, the central cross-section of the cross-member 12 will be shaped and sized to provide the cross-member with the torsional compliance characteristics required by the specific application.

The trailing arms 14 carry, in a per-se-known manner, respective wheel-carrying members 16, respective bushings 18 for articulated connection of the twist-beam axle 10 to the vehicle body (not shown), respective plates 20 for supporting springs (not shown), as well as possible further members required for the proper functioning of the twist-beam axle. The trailing arms 12 are made of metal, for example steel or aluminium, and are configured to behave, under load, as substantially rigid components.

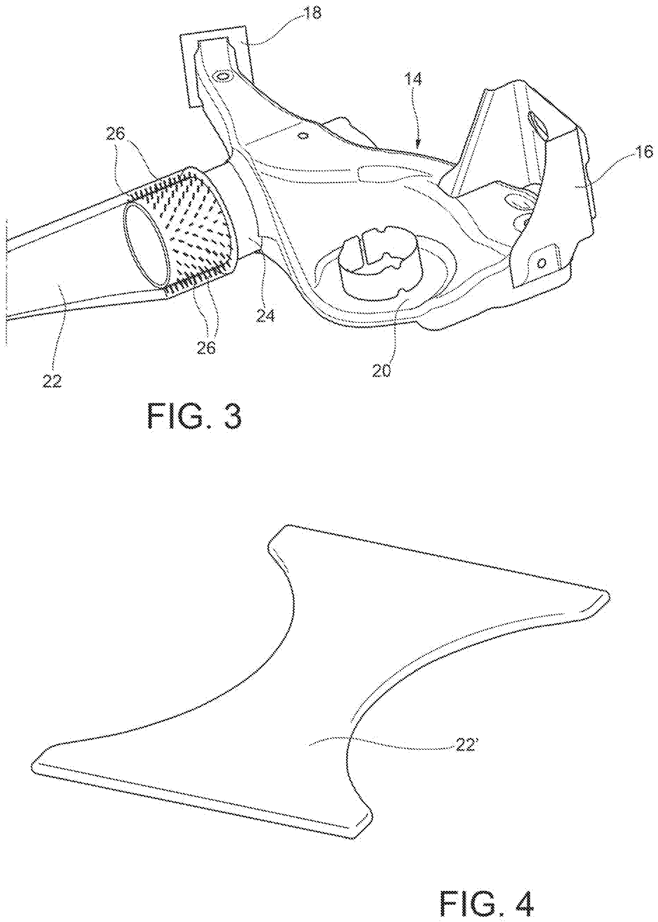

With reference also to Figures 2 and 3, the cross-member 12 has a hybrid structure including a central element 22 of composite material (matrix of resin, in particular thermosetting resin, reinforced with fibres, for example carbon fibres and/or glass fibres and/or aramid fibres) and a pair of lateral elements 24 of metal, for example steel or aluminium, each firmly connected to a respective end of the central element 22.

The reinforcement fibres of the composite material of the central element 22 may be arranged in different ways, for example according to a bi-axial, a three-axial or a three-dimensional configuration, depending on the stiffness level of the cross-member required by the specific application. Not only the arrangement of the fibres, but also the diameter of the fibres and/or the number of layers of fibres, will be suitably chosen by the designer depending on the specific application.

The central element 22 and the lateral elements 24 are suitably designed to provide the cross-member 12 with the required stiffness characteristics. In addition, the lateral elements 24 also act as interfaces with the trailing arms 14. Each of the two trailing arms 14 is, in fact, firmly connected to the cross-member 12 by welding with a respective lateral element 24.

With reference in particular to Figure 3, each lateral element 24 of the cross-member 12 is made as a tubular element and has, on the external surface of a transversely inner portion thereof (that is, a portion facing towards the central element 22) a plurality of protrusions 26, which are made, in particular, as radial pin-like protrusions and, preferably, are uniformly distributed on the external surface of said portion of the lateral element 24.

The protrusions 26 act as anchoring points for the fibres of the composite material of the central element 22 for the rigid connection of the two lateral elements 24 to the central element 22, as explained further below. The protrusions 26 also act as heat sinks that allow to spread the heat applied during the welding process of the trailing arms 14 to the lateral elements 24 on a wider area of the composite material of the central element 22, thus preventing heat from accumulating to such an extent as to jeopardize the mechanical properties of the composite material of the central element 22.

A twist-beam axle is thus obtained which, in spite of the fact that includes conventional trailing arms made of metal, has a reduced weight compared to the conventional twist-beam axles as it includes a cross-member with a hybrid structure with a central element of composite material.

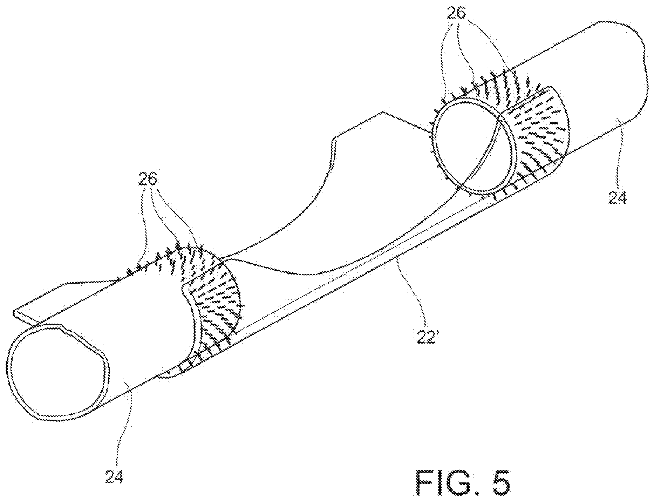

The method used, according to the present invention, for manufacturing the twist-beam axle described above will be described now with reference to Figures 4 and 5.

The main steps of the method are the following ones:
a) providing the cross-member 12 with a hybrid structure by joining the two lateral elements 24 of metal to the central element 22 of composite material;
b) providing the trailing arms 14 of metal; and
c) connecting the trailing arms 14 to the cross-member 12 by welding of each trailing arm 14 with a respective lateral element 24 of the cross-member 12.

More specifically, step a) (manufacturing of the cross-member 12) is carried out as follows.

First, a fibre mat (indicated at 22' in Figures 4 and 5), intended to form the central element 22 of the cross-member 12, as well as the two lateral elements 24 of metal, are obtained, separately from each other. The fibre mat 22' is formed by superimposed fibre layers (with suitable arrangement of the fibres, diameter of the fibres and number of layers, depending on the design requirements, as already pointed out above) and has a shape corresponding to the development of the central element 22 of the cross-member 12.

Once the fibre mat 22' and the two lateral elements 24 are made, the fibre mat 22' is wound, at its ends, about the transversely inner portions of the two lateral elements 24 (see Figure 5), so that the protrusions 26 of said elements penetrate between the fibres of the fibre mat 22', thus ensuring a safe and secure connection between the central element 22 and the lateral elements 24. The fibre mat 22' is then impregnated with the resin matrix and cured, for example by autoclave curing process or any other known curing process. The manufacturing of the cross-member 12 is thus completed and the final step of joining, by welding, of the trailing arms 14 to the lateral elements 24 of the cross-member 12 may be carried out.

Naturally, the principle of the invention is defined by the scope of the invention as defined in the appended claims.

## Claims

1. Method for manufacturing a twist-beam axle for a rear suspension of a vehicle, comprising the steps of:
a) providing a cross-member (12) having a hybrid structure by joining two lateral elements (24) of metal to a central element (22) of composite material having a resin matrix reinforced with fibres;
b) providing a pair of trailing arms (14) of metal; and
c) firmly connecting the trailing arms (14) to the cross-member (12) by welding each trailing arm (14) with a respective lateral element (24) of the cross-member (12);
**characterised in that** the central element (22) of the cross-member (12) is made from a fibre mat (22') having a shape corresponding to the development of said central element (22) and wherein the step of joining said central element (22) to the lateral elements (24) is carried out by wounding of the opposite ends of the fibre mat (22') about transversely inner portions of the respective lateral elements (24), said transversely inner portions having on their external surfaces a plurality of protrusions (26), so that the protrusions (26) of the lateral elements (24) penetrate between the fibres of the fibre mat (22').

2. Method according to claim 1, wherein the protrusions (26) are uniformly distributed on the lateral surface of the respective lateral elements (24).

3. Method according to claim 1 or claim 2, wherein the protrusions (26) are radial pin-like protrusions.

## Patentansprüche

1. Verfahren zur Herstellung einer Verbundlenkerachse für eine Hinterradaufhängung eines Fahrzeugs, das die folgenden Schritte umfasst:
a) Bereitstellen eines Querträgers (12) mit einer Hybridstruktur durch Verbinden zweier seitlicher Elemente (24) aus Metall mit einem zentralen Element (22) aus Verbundmaterial mit einer mit Fasern verstärkten Harzmatrix;
b) Bereitstellen eines Paares von Längslenkern (14) aus Metall; und
c) festes Verbinden der Längslenker (14) mit dem Querträger (12) durch Verschweißen jedes Längslenkers (14) mit einem entsprechenden seitlichen Element (24) des Querträgers (12),
**dadurch gekennzeichnet, dass** das zentrale Element (22) des Querträgers (12) aus einer Fasermatte (22') hergestellt ist, die eine Form aufweist, die der Abwicklung des zentralen Elements (22) entspricht, und wobei der Schritt des Verbindens des zentralen Elements (22) mit den seitlichen Elementen (24) durch Wickeln der gegenüberliegenden Enden der Fasermatte (22') um gegenüberliegende innere Abschnitte der entsprechenden seitlichen Elemente (24) ausgeführt wird, wobei die gegenüberliegenden inneren Abschnitte an ihren Außenflächen eine Vielzahl von Vorsprüngen (26) aufweisen, so dass die Vorsprünge (26) der seitlichen Elemente (24) zwischen die Fasern der Fasermatte (22') eindringen.

2. Verfahren nach Anspruch 1, wobei die Vorsprünge (26) gleichmäßig auf der Seitenfläche der entsprechenden seitlichen Elemente (24) verteilt sind.

3. Verfahren nach Anspruch 1 oder Anspruch 2, wobei die Vorsprünge (26) radial ausgerichtete stiftförmige Vorsprünge sind.

## Revendications

1. Procédé pour fabriquer un essieu à poutre de torsion pour une suspension arrière d'un véhicule, comprenant les étapes consistant à :
a) fournir une traverse (12) ayant une structure hybride en assemblant deux éléments latéraux (24) en métal avec un élément central (22) en matériau composite ayant une matrice de résine renforcée par des fibres ;
b) fournir une paire de bras oscillants (14) en métal ; et
c) relier fermement les bras oscillants (14) à la traverse (12) en soudant chaque bras oscillant (14) à un élément latéral (24) respectif de la traverse (12) ;
**caractérisé en ce que**
l'élément central (22) de la traverse (12) est fait d'un tapis de fibres (22') ayant une forme correspondant au développement dudit élément central (22) et dans lequel l'étape consistant à assembler ledit élément central (22) avec les éléments latéraux (24) est réalisée par enroulement des extrémités opposées du tapis de fibres (22') autour de portions transversalement intérieures des éléments latéraux (24) respectifs, lesdites portions transversalement intérieures ayant sur leurs surfaces externes une pluralité de saillies (26), de façon à ce que les saillies (26) des éléments latéraux (24) pénètrent entre les fibres du tapis de fibres (22').

2. Procédé selon la revendication 1, dans lequel les saillies (26) sont réparties uniformément sur la surface latérale des éléments latéraux (24) respectifs.

3. Procédé selon la revendication 1 ou la revendication 2, dans lequel les saillies (26) sont des saillies de type tige radiales.
